Europäisches Patentamt

European Patent Office

Office européen des brevets

(11) Numéro de publication : **0 483 034 A2**

# (12) DEMANDE DE BREVET EUROPEEN

(21) Numéro de dépôt : **91440085.8**

(22) Date de dépôt : **24.10.91**

(51) Int. Cl.⁵ : **F16M 13/00**

(30) Priorité : **24.10.90 FR 9013345**

(43) Date de publication de la demande :
**29.04.92 Bulletin 92/18**

(84) Etats contractants désignés :
**BE DE ES GB IT NL**

(71) Demandeur : **MACI OPTIC Sarl**
**Z.I. de Bellegarde-Industries**
**F-01200 Bellegarde (FR)**

(72) Inventeur : **Gehrig, Jean**
**La Rippe**
**F-74580 Viry (FR)**

(74) Mandataire : **Arbousse-Bastide, Jean-Claude**
**Philippe**
**Cabinet Maisonnier 28 rue Servient**
**F-69003 Lyon (FR)**

(54) **Dispositif de maintien, notamment de verres d'optique.**

(57) Il comporte une tige horizontale (2) sur la longueur de laquelle sont pratiquées à espaces réguliers des gorges périphériques (21) dans lesquelles sont fixées par soudage des pinces (22) constituées de fil métallique tordu en forme de M aux angles (23, 27 , 28) arrondis, dont l'extrémité des branches (25, 26) sont pourvues de lames métalliques pliées (30, 31) soudées à l'intérieur desdites branches (25,26), les extrémités desdites lames métalliques (30, 31) étant découpées en V rentrant (38) formant deux pointes latérales (36, 37).

Fig 1

EP 0 483 034 A2

La présente invention a pour objet un dispositif de maintien de verres d'optique permettant la manutention, pendant les différents traitements qu'on leur fait subir, des verres minéraux ou organiques.

Avant d'être livré au lunettier, qui le taillera pour lui donner la forme adaptée à une monture de lunettes, le verre d'optique, dont le diamètre varie de 60 à 80 millimètres et dont l'épaisseur est variable, doit subir différents traitements, notamment l'application d'un vernis permettant d'augmenter sa résistance superficielle ou de modifier sa tension de surface.

Le vernis ne peut être appliqué que sur un verre parfaitement propre et sec, aussi ce dernier est-il passé dans différents bains de nettoyage puis complètement séché avant d'être trempé dans un bain de vernis et séché à nouveau. Il est ensuite soumis à plusieurs contrôles successifs permettant de déceler d'éventuelles imperfections.

Ces différentes phases du traitement du verre nécessitent de pouvoir maintenir le verre solidement sans en altérer les faces internes et externes, et aussi que le moyen de maintien soit aisé à mettre en oeuvre et n'occasionne pass de perte de temps pour le manipulateur.

Il existe à ce jour plusieurs techniques pour maintenir les verres, dont l'une des plus utilisées dans les grands laboratoires consiste en une pince-ciseau qui permet de prendre un verre, et qui est ensuite accrochée à différents supports. Une autre technique, plus fréquemment utilisée dans les laboratoires de taille moindre, consiste à coller un petit support dans une entaille en coin pratiquée dans la périphérie du verre et qui est supprimée en fin de traitement.

Ces dispositifs présentent des inconvénients : la pince est assez encombrante et ne peut saisir qu'un verre à la fois, quant au petit support collé son utilisation est peu rentable eu égard aux manipulations nécessaires à sa pose et à sa dépose.

La présente invention permet de remédier à ces inconvénients en proposant un dispositif de mise en oeuvre simple, sur lequel peuvent être mis en place plusieurs verres qui restent accessibles séparément à tout moment, ledit dispositif s'utilisant du début à la fin du processus de traitement.

Le dispositif objet de l'invention, de préférence réalisé en métal, comporte une tige horizontale servant à le suspendre lors des différents traitements et supportant une série de pinces dont chacune est constituée d'un fil métallique tordu de manière à présenter la forme d'un M aux branches arrondies dont les extrémités, munies de lames métalliques, peuvent maintenir entre elles un verre par sa tranche, ce dernier étant mis en place après écartement desdites branches et le maintien s'effectuant par un effet de ressort.

Le fait d'avoir à utiliser le dispositif du début à la fin du traitement des verres d'optique implique qu'il doive répondre à certaines exigences : en premier lieu, il ne doit laisser qu'un minimum de traces sur le verre, et de plus les lames en contact avec ledit verre ne doivent pas pouvoir retenir de vernis qui pourrait ensuite s'écouler en partie sur le verre, car même après nettoyage, lors d'une réutilisation du dispositif les particules de vernis restantes pourraient souiller les différents bains utilisés pour le traitement.

Les caractéristiques et les avantages de la présente invention ressortiront plus clairement de la description qui suit et qui se rapporte au dessin annexé lequel en représente un mode de réalisation non limitatif.

Dans le dessin annexé :
– la figure 1 représente une vue en perpective d'un premier mode de réalisation du dispositif selon l'invention.
– la figure 2 représente une vue en élévation et de face de ce même dispositif.
– la figure 3a représente une vue en plan de l'extrémité d'une lame en contact avec le bord d'un verre.
– la figure 3b représente une variante de cette extrémité.
– la figure 4 représente une vue de face d'un second mode de réalisation du dispositif selon l'invention.

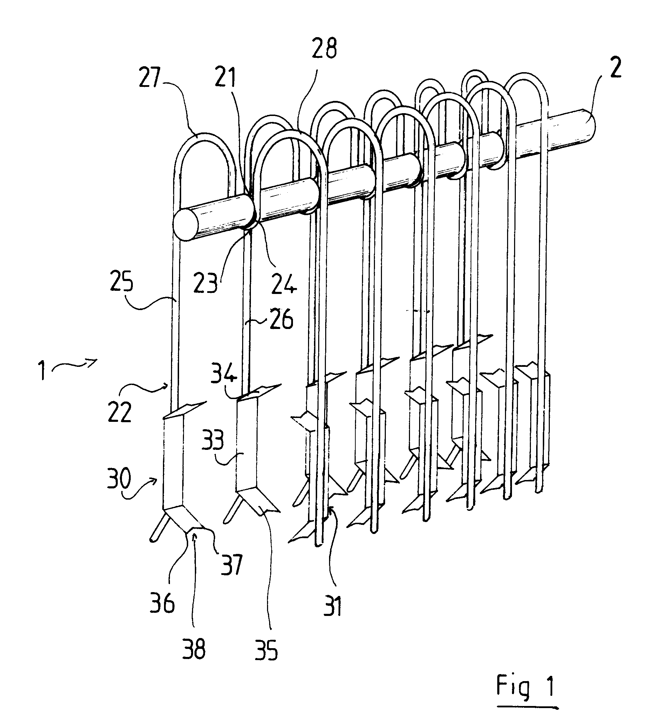

Si on se réfère d'abord à la figure 1, on voit que le dispositif 1 selon l'invention comporte une tige 2 de section circulaire, par les extrémités de laquelle le dispositif 1 peut être saisi ou suspendu, et où sont pratiquées, à espaces réguliers, des gorges périphériques 21 servant à la fixation, par soudure, de pinces 22 réalisées en fil métallique tordu en forme de M aux angles arrondis, et dont la partie rentrante 23 s'insère dans la gorge 21, une soudure 24 pratiquée bilatéralement permettant de conserver au fil toute son élasticité.

Les branches 25 et 26 d'une pince 22, dont l'élasticité est également assurée par les angles arrondis sortants 27 et 28, sont, à leurs extrémités en regard, munies chacune d'une lame rectangulaire, respectivement 30 et 31, pliée en trois parties, une partie centrale 33 parallèle à la branche à l'intérieur de laquelle elle est soudée, une partie supérieure 34 repliée vers le bas et l'intérieur, et une partie inférieure 35 replié vers le haut et l'intérieur.

Les extrémités de ces parties 34 et 35 sont découpées en V rentrant 38 de manière à créer deux pointes latérales 36 et 37 pouvant servir dans certains cas au maintien du verre.

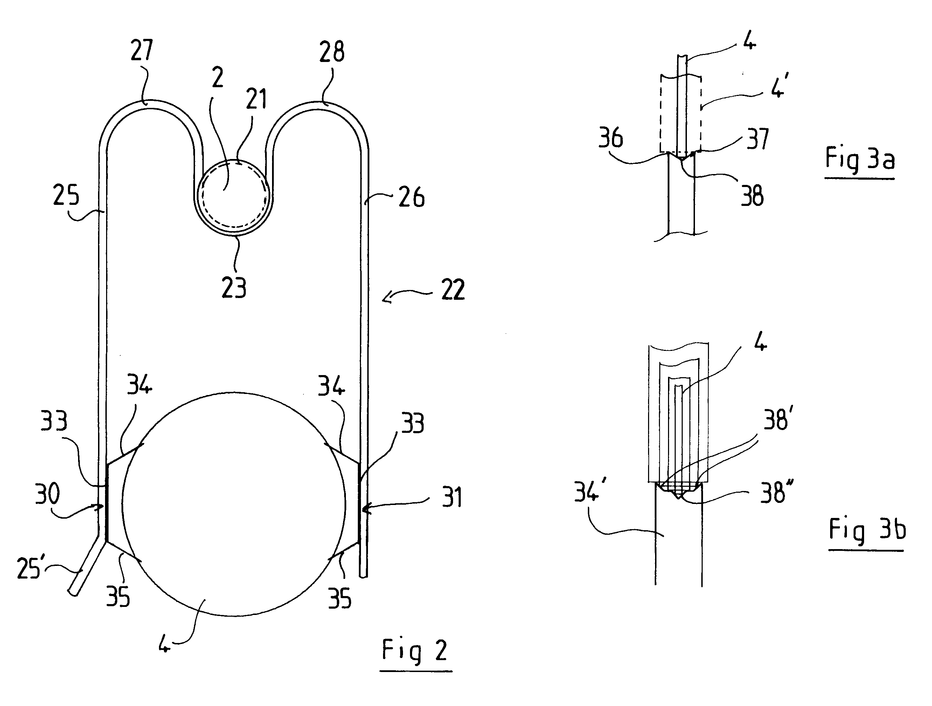

Si on se réfère à la figure 2 on peut voir que le verre 4 est positionné entre les lames 30 et 31 et qu'il y est maintenu par les parties 34 et 35 desdites lames, l'élasticité des branches 25 et 26 permettant de bien appliquer lesdites parties sur la périphérie du verre 4. La branche 25 est pliée vers l'extérieur non loin de son extrémité, la partie 25' ainsi formée permettant au manipulateur d'écarter plus facilement les deux branches 25 et 26 pour introduire le verre 4.

On peut voir également que lorsque le porte-verres 1 est sorti d'un bain de traitement, le liquide peut aisément s'écouler le long des parties 34 et 35 sans risque de s'écouler sur le verre 4.

Pour installer un verre dans une pince 22, il suffit d'écarter les branches 25 et 26 d'une main et de l'autre de positionner le verre entre les lames 30 et 31, ce qui se fait facilement en retournant le porte-verres 1, lames 30 et 31 dirigées vers le haut.

Si on se réfère maintenant à la figure 3a, on peut voir qu'un verre 4 de faible épaisseur s'insère, par sa périphérie, dans la partie en V 38, ce qui n'occasionne qu'une petite marque sur le verre après traitement. Dans le cas d'un verre 4' d'épaisseur plus importante, le maintien de celui-ci s'effectue par les pointes 36 et 37 du V 38.

Si on se réfère à la figure 3b, on voit qu'une lame 33 de largeur plus importante offre la possibilité d'une découpe 34' différente de ses extrémités de contact avec le verre. Cette découpe est en forme de V tronqué 38' dans lequel est découpé un V 38", cette forme permettant le maintien de tous les verres, quelle que soit leur épaisseur.

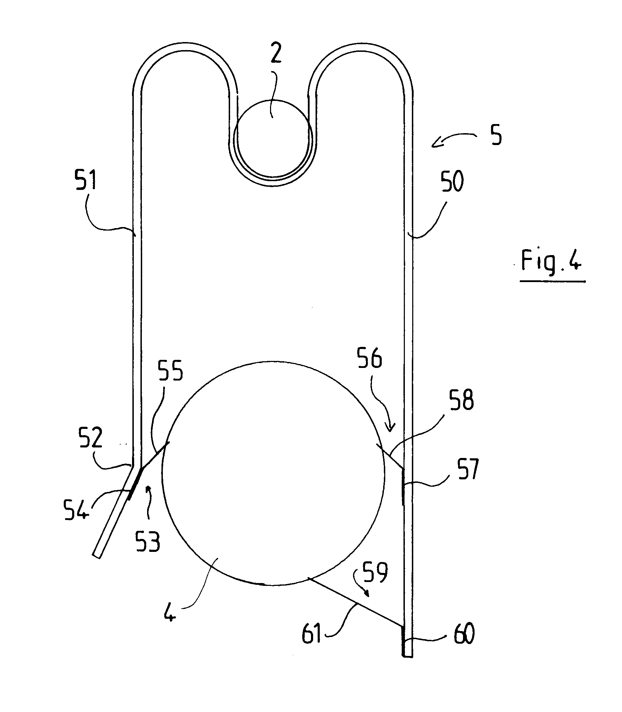

Si on se réfère à la figure 4 on voit que le dispositif selon l'invention peut comporter des pinces 5 de formes différentes où les lames sont au nombre de trois.

La pince 5 est de forme analogue à la pince 22, une de ses branches, 51, comportant non loin de son extrémité un pli 52 orienté vers l'extérieur. Au niveau de ce pli 52 est soudée, à l'intérieur, une lame 53 rectangulaire pliée en deux parties, une partie 54 soudée à la branche 51 et une partie 55 repliée vers le bas et vers l'intérieur, dont l'extrémité est découpée comme l'extrémité 34 ou 34' d'une lame 33.

L'autre branche, 50, de la pince 5 est pourvue, en regard de la lame 53 de la branche 51, d'une lame 56 rectangulaire pliée en deux parties, une partie 57 soudée à la branche 50 à l'intérieur, et une partie 58 repliée vers le bas et vers l'intérieur, dont l'extrémité est découpée de la même manière que le partie 55 de la lame 53.

Cette branche 50 comporte en outre, à son extrémité, donc en dessous de la lame 56, une lame 59 pliée en deux parties, une partie 60 soudée à la branche 50 à l'intérieur et une partie 61 repliée vers le bas et vers l'intérieur, dont la longueur est supérieure à celle de la partie 58 de la lame 56.

Le verre 4 est ainsi maintenu latéralement par les lames 53 et 56 et à sa partie inférieure par la lame 59.

Cette configuration du porte-verres selon l'invention présente un avantage sur celui décrit auparavant, en ceci que lorsque le porte-verres est extrait d'un bain, le liquide s'écoule toujours du verre vers l'extérieur sur les parties 55, 58 et 61 des lames 53, 56 et 59, alors que dans le cas du porte-verres de la figure 2 le liquide s'écoule vers le verre sur les parties 35 des lames 33, et il peut en résulter qu'une goutte subsiste en partie inférieure du verre.

Le dispositif selon l'invention, destiné essentiellement au maintien de verres d'optique, peut également être utilisé pour le maitien d'autres pièces devant suivre un traitement analogue après leur fabrication, comme par exemple des implants oculaires.

**Revendications**

**1)** Dispositif de maintien, notamment de verres d'optique, caractérisé en ce qu'il comporte une tige horizontale (2) sur la longueur de laquelle sont pratiquées à espaces réguliers des gorges périphériques (21) dans lesquelles sont fixées par soudage des pinces (22) constituées de fil métallique tordu en forme de M aux angles (23, 27, 28) arrondis, dont l'extrémité des branches (25, 26 ; 50, 51) sont pourvues de lames métalliques pliées, soudées à l'intérieur desdites branches (25, 26 ; 50, 51) , les extrémités desdites lames métalliques étant découpées en V rentrant (38) formant deux pointes latérales (36, 37).

**2)** Dispositif selon la revendication 1, caractérisé en ce que les branches (25, 26) ont leurs extrémités en regard et en ce que les lames métalliques soudées à l'intérieur des branches (25, 26) sont deux lames rectangulaires (30, 31) pliées en trois parties, soudées à l'intérieur desdites branches (25, 26) par leur partie centrale (33), leur partie supérieure (34) étant repliée vers le bas et vers l'intérieur, et leur partie inférieure (35) repliée vers le haut et vers l'intérieur.

**3)** dispositif selon la revendication 1, caractérisé en ce qu'il comporte trois lames, une lame (53) soudée à l'intérieur d'une branche (51) à proximité de son extrémité et pliée en deux parties dont l'une (54) est soudée à ladite branche (51) et l'autre (55) est repliée vers le bas et vers l'intérieur ; et deux lames (56, 59) soudées sur l'autre branche (50), plus longue que la branche (51), l'une (56) en regard de la lame (53), l'autre (59) à l'extrémité de la branche (50), toutes deux étant pliées en deux parties dont l'une (57, 60) est soudée à la branche (50) et l' autre (58, 61) est repliée vers le bas et vers l'intérieur, la lame inférieure (59) ayant une partie inclinée (61) plus longue que la partie inclinée (58) de la lame (56).

**4)** Dispositif selon l'une quelconque des revendications 1 à 3, caractérisé en ce que les extrémités des lames (30, 31, 53, 56, 59) sont découpées en un V tronqué (38') dans lequel est découpé un V (38").

Fig 1

Fig 2

Fig 3a

Fig 3b

EP 0 483 034 A2

Fig. 4